# EUROPEAN PATENT APPLICATION

(11) **EP 4 718 129 A1**
(43) Date of publication of application: **01.04.2026**
(21) Application number: 24835144.7
(22) Date of filing: 17.05.2024
(51) Int. Cl.: G02B 6/02

(54) **OPTICAL FIBER AND METHOD FOR PREPARING OPTICAL FIBER**

(30) Priority: 03.07.2023 CN 202310806279
(71) Applicant: Huawei Technologies Co., Ltd., Shenzhen, Guangdong 518129 (CN); Beijing University Of Chemical Technology, Beijing 100029 (CN)
(72) Inventor: SUN, Zemeng, Shenzhen, Guangdong 518129 (CN); CHEN, Hongyu, Shenzhen, Guangdong 518129 (CN); QIU, Botong, Shenzhen, Guangdong 518129 (CN); WU, Daming, Beijing 100029 (CN); GAO, Xiaolong, Beijing 100029 (CN)
(74) Representative: Körber, Martin Hans
(86) International application number: PCT/CN2024/093911
(87) International publication number: WO 2025/007659

(57) **Abstract**

Embodiments of this application provide an optical fiber and a method for preparing an optical fiber. A refractive index difference between at least two points in a cross section of the optical fiber is greater than or equal to 0.01, at least five groups of points in the cross section meet a preset condition, a k^{th} group of points in the at least five groups of points include a point *xₖ* and a point *yₖ*, the point *xₖ* and the point *yₖ* are any point in the cross section, the preset condition includes *nxₖ - nyₖ* ≥ 0.001 and *rxₖ - ryₖ <* 0 , *nxₖ* is a refractive index of the point *xₖ*, *nyₖ* is a refractive index of the point *yₖ*, *rxₖ* is a distance from the point *xₖ* to a center of the cross section, *ryₖ* is a distance from the point *Yₖ* to the center of the cross section, and k is a positive integer greater than or equal to 1. The optical fiber includes a plurality of groups of points with different refractive indexes, so that the cross section of the optical fiber has different refractive index distribution characteristics. As a result, light can be totally reflected at a corresponding position in a transmission process in the optical fiber, and an effect of improving optical fiber bandwidth is achieved.

## Description

This application claims priority to Chinese Patent Application No. 202310806279.1, filed with the China National Intellectual Property Administration on July 3, 2023, and entitled "OPTICAL FIBER AND METHOD FOR PREPARING OPTICAL FIBER", which is incorporated herein by reference in its entirety.

### TECHNICAL FIELD

Embodiments of this application relate to the field of materials, and more specifically, to an optical fiber, a method for preparing an optical fiber, a communication medium, an optical module, and an optical transmission system.

### BACKGROUND

A plastic optical fiber (plastic optical fiber, POF) is an optical fiber made of high-transparent polymer. Compared with a quartz optical fiber, the plastic optical fiber has advantages such as light weight and strong flexibility, and has been widely used in vehicle-mounted, fiber to the home, and medical scenarios. To improve a bandwidth of the plastic optical fiber, a fiber core part of the plastic optical fiber is usually adjusted, so that a refractive index of a core layer material of the fiber core part is different. In the conventional technology, when a plastic optical fiber is prepared, a plurality of materials with different refractive indexes need to be prepared in advance, and then the plurality of materials are combined into one optical fiber. This preparation process is complex. In addition, because the materials with different refractive indexes have different viscosities, it is difficult to combine the plurality of materials into an optical fiber with uniform structure distribution, so that performance of the optical fiber is affected.

How to improve performance of the plastic optical fiber becomes an urgent problem to be resolved.

### SUMMARY

Embodiments of this application provide an optical fiber, a method for preparing an optical fiber, a communication medium, an optical module, and an optical transmission system. The optical fiber includes a plurality of groups of points with different refractive indexes, so that a cross section of the optical fiber has different refractive index distribution characteristics. In this way, light can be totally reflected at a corresponding position in a transmission process in the optical fiber, and an effect of improving optical fiber bandwidth is achieved.

According to a first aspect, an optical fiber is provided. A refractive index difference between at least two points in a cross section of the optical fiber is greater than or equal to 0.01, at least five groups of points in the cross section meet a preset condition, a k^{th} group of points in the at least five groups of points include a point *xₖ* and a point *yₖ*, the point *xₖ* and the point *yₖ* are any point in the cross section, the preset condition includes *nxₖ - nyₖ* ≥ 0.001 and *rxₖ - ry, <* 0 *, nxₖ* is a refractive index of the point *xₖ*, *nyₖ* is a refractive index of the point *yₖ, rxₖ* is a distance from the point *xₖ* to a center of the cross section, *ryₖ* is a distance from the point *yₖ* to the center of the cross section, and k is a positive integer greater than or equal to 1.

In this embodiment of this application, the optical fiber includes points whose refractive index difference is greater than or equal to 0.01. Optical fibers with different numerical apertures can be prepared by controlling the refractive index difference between the points, to obtain an optical fiber that meets a performance requirement. The optical fiber further includes at least five groups of points whose refractive index difference is greater than 0.001, so that the cross section of the optical fiber has different refractive index distribution characteristics. In this way, light can be totally reflected at a corresponding position in a transmission process in the optical fiber, and an effect of improving optical fiber bandwidth is achieved. In addition, each group of points meet the preset condition *rxₖ - ryₖ* < 0 , so that the refractive index of the optical fiber is in gradient distribution.

With reference to the first aspect, in some implementations of the first aspect, at least seven groups of points in the cross section meet the preset condition.

With reference to the first aspect, in some implementations of the first aspect, a refractive index difference between at least two points in the cross section is greater than or equal to 0.013.

In this embodiment of this application, the optical fiber includes a plurality of points whose refractive index difference is greater than or equal to 0.013, so that a numerical aperture of the optical fiber is large, and performance of the optical fiber is improved.

With reference to the first aspect, in some implementations of the first aspect, a distance between a point *xᵢ* and a point *yᵢ* in an i^{th} group of points in at least one group of points in the cross section is less than or equal to 50 micrometers, a refractive index difference between the point *xᵢ* and the point *yᵢ* is greater than 0.002, and i is a positive integer greater than or equal to 1.

With reference to the first aspect, in some implementations of the first aspect, a transmittance of a material of the optical fiber is greater than 80%.

With reference to the first aspect, in some implementations of the first aspect, a transmittance of a material of the optical fiber is greater than 90%.

With reference to the first aspect, in some implementations of the first aspect, a test wavelength of the transmittance is 650 nanometers.

In this embodiment of this application, a material of the optical fiber has a high transmittance, so that a loss of light during transmission in the optical fiber is small, and performance of the optical fiber is improved.

With reference to the first aspect, in some implementations of the first aspect, a distance between every two points in the cross section is greater than or equal to 0.2 micrometers.

With reference to the first aspect, in some implementations of the first aspect, distribution of refractive indexes of some points in a connection line from the center to an edge in the cross section is fitted as a curve, or distribution of refractive index differences between the some points and the center point in the cross section is fitted as a curve.

In this embodiment of this application, the distribution of the refractive indexes in the cross section of the optical fiber is in a smooth and gradient manner.

With reference to the first aspect, in some implementations of the first aspect, the curve is an upward convex curve.

With reference to the first aspect, in some implementations of the first aspect, the curve is a partial curve in a curve of a quadratic equation in one unknown or a partial curve in a curve of a cubic equation in one unknown.

In this embodiment of this application, the distribution of the refractive indexes in the cross section of the optical fiber is in a parabolic shape. In other words, the distribution of the refractive indexes in the cross section of the optical fiber is a smooth and gradient curve.

With reference to the first aspect, in some implementations of the first aspect, the optical fiber is a plastic optical fiber.

Optionally, the plastic optical fiber in this embodiment of this application may include a polymer material. Alternatively, the plastic optical fiber in this embodiment of this application may include quartz and a polymer material.

According to a second aspect, a method for preparing an optical fiber is provided. The method includes: inputting M initial materials into an optical fiber preparer, and obtaining an optical fiber from an outlet of the optical fiber preparer, where refractive indexes of at least two of the M initial materials are different.

In this embodiment of this application, the optical fiber may be prepared based on at least two initial materials with different refractive indexes and one optical fiber preparer, so that the optical fiber preparation method is simple and has high efficiency.

With reference to the second aspect, in some implementations of the second aspect, the optical fiber preparer includes a splitter and a combiner. The splitter includes M first inlets and N first outlets, at least two of the M first inlets communicate with at least one of the N first outlets. The combiner includes P second inlets and Q second outlets, and the P second inlets communicate with the Q second outlets. The N first outlets communicate with the P second inlets, M, N, and P are positive integers greater than or equal to 2, Q is a positive integer greater than or equal to 1, and P is greater than or equal to Q.

With reference to the second aspect, in some implementations of the second aspect, separately inputting the M initial materials into the M first inlets of the splitter, and obtaining N materials from the N first outlets of the splitter, where proportions of initial materials included in at least two of the N materials are different.

In this embodiment of this application, the splitter in the optical fiber preparer may simultaneously split and combine the M initial materials, to simultaneously prepare the N materials to be composited into the optical fiber. In other words, according to the method in this embodiment of this application, before the optical fiber is prepared, the N materials required for compositing the optical fiber do not need to be separately prepared based on the M initial materials, so that a process of preparing the optical fiber is simple, and efficiency of preparing the optical fiber is improved.

With reference to the second aspect, in some implementations of the second aspect, separately inputting the N materials into the P second inlets of the combiner, and obtaining the optical fiber from the Q second outlets of the combiner, where P is equal to N.

In this embodiment of this application, after the M initial materials are put into the optical fiber preparer, the N materials may be obtained from the splitter, and the N materials are composited in the combiner, to obtain the optical fiber, so that difficulty in preparing the optical fiber is reduced.

With reference to the second aspect, in some implementations of the second aspect, a floating rate of a refractive index of each of the N materials in the first outlet of the splitter or the second inlet of the combiner is less than 0.5%.

In this embodiment of this application, the refractive indexes of the N materials obtained from the splitter have small floating rates. In other words, the refractive indexes of the N materials are stable, so that an optical fiber with a stable structure can be prepared. By controlling the material refractive index of each runner, the distribution of the refractive indexes in the cross section of the optical fiber is in a gradient manner.

With reference to the second aspect, in some implementations of the second aspect, the splitter further includes a porous plate structure. At least two of the M initial materials are sequentially input to the at least one first outlet through the at least two first inlets and the porous plate structure, and quantities of the at least two of the M initial materials that are input to the first outlet through the porous plate structure are different.

In this embodiment of this application, a quantity of initial materials input to each first outlet may be controlled by using the porous plate structure in the splitter, so that the N materials may be prepared by using the splitter, and proportions of initial materials included in at least two of the N materials are different.

With reference to the second aspect, in some implementations of the second aspect, a first split structure is disposed in at least one of the M first inlets, and quantities of the initial materials split through the first split structure are different.

In this embodiment of this application, the first split structure may be used to control the quantity of splitting the initial material, to prepare the N materials, and the proportions of the initial materials included in at least two of the N materials are different.

With reference to the second aspect, in some implementations of the second aspect, obtaining the M initial materials through M extruders.

With reference to the second aspect, in some implementations of the second aspect, the optical fiber is the optical fiber according to any one of the first aspect or the possible implementations of the first aspect.

In this embodiment of this application, the optical fiber according to any one of the first aspect or the possible implementations of the first aspect may be prepared based on at least two initial materials with different refractive indexes and one optical fiber preparer, so that difficulty in preparing an optical fiber with high performance is reduced.

According to a third aspect, a communication medium is provided. The communication medium includes an external sleeve and the optical fiber according to any one of the first aspect or the possible implementations of the first aspect. Alternatively, the optical fiber in the communication medium is prepared by using the method according to any one of the second aspect or the possible implementations of the second aspect.

According to a fourth aspect, an optical module is provided. The optical module includes an optical-to-electrical converter and the optical fiber according to any one of the first aspect or the possible implementations of the first aspect. Alternatively, the optical fiber in the optical module is prepared by using the method according to any one of the second aspect or the possible implementations of the second aspect.

According to a fifth aspect, an optical transmission system is provided. The optical transmission system includes an optical transmitter, an optical receiver, and the optical fiber according to any one of the first aspect or the possible implementations of the first aspect. Alternatively, the optical fiber in the optical transmission system is prepared by using the method according to any one of the second aspect or the possible implementations of the second aspect.

### BRIEF DESCRIPTION OF DRAWINGS

FIG. 1 is a diagram of a cross section of an optical fiber according to an embodiment of this application;
FIG. 2 is a diagram of distribution curves of refractive index differences of some points in a cross section according to an embodiment of this application;
FIG. 3 is a schematic flowchart of a method for preparing an optical fiber according to an embodiment of this application;
FIG. 4 is a diagram of a structure of a device for preparing an optical fiber according to an embodiment of this application;
FIG. 5 is a diagram of a structure of a device for preparing an optical fiber according to another embodiment of this application;
FIG. 6 is a diagram of a cross section of a first inlet according to an embodiment of this application; and
FIG. 7 is a schematic flowchart of a method for preparing an optical fiber according to another embodiment of this application.

### DESCRIPTION OF EMBODIMENTS

The following describes technical solutions of embodiments in this application with reference to accompanying drawings.

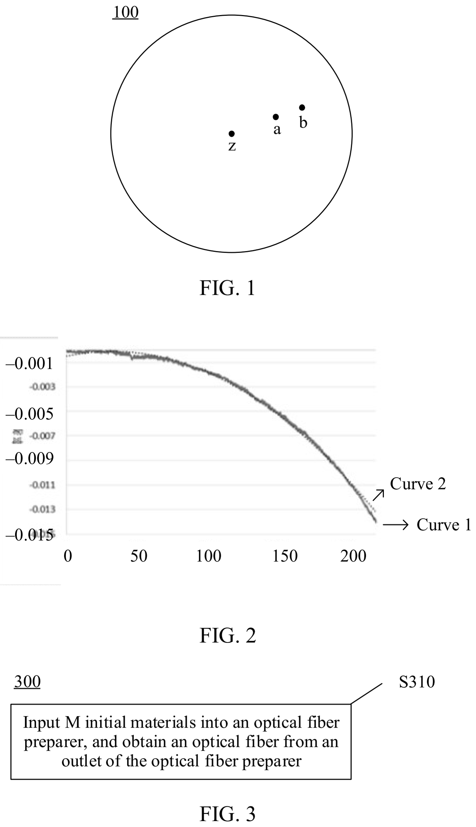

FIG. 1 is a diagram of a cross section of an optical fiber according to an embodiment of this application. The cross section of the optical fiber 100 in FIG. 1 may include at least two points. A refractive index difference between the at least two points is greater than or equal to 0.01. At least five groups of points in the cross section meet a preset condition, a k^{th} group of points in the at least five groups of points include a point *xₖ* and a point *yₖ*, the point *xₖ* and the point *yₖ* are any point in the cross section, the preset condition includes *nxₖ - nyₖ* ≥ 0.001 and *rxₖ - ryₖ <* 0 *, nxₖ* is a refractive index of the point *xₖ, nyₖ* is a refractive index of the point *yₖ, rxₖ* is a distance from the point *xₖ* to a center of the cross section, *ryₖ* is a distance from the point *yₖ* to the center of the cross section, and k is a positive integer greater than or equal to 1.

In some embodiments, each point in the cross section is an intersection point between the cross section and a light that passes through the cross section when a refractive index or a refractive index difference is tested. For example, as shown in FIG. 1, the cross section may include a point a and a point b. An area or a size of each point in the cross section is not limited in this embodiment of this application.

In some embodiments, a refractive index difference between two points in the cross section may be determined based on propagation speeds of light at the two points.

In some embodiments, the center of the cross section may be a geometric center, a center of gravity, or the like of the cross section. For example, if the cross section is a regular graph having symmetry, the center of the cross section may be a geometric center of the cross section. A regular graph having symmetry may be, for example, a parallel quadrilateral, a square, a regular triangle, or a circle. For example, as shown in FIG. 1, because the cross section is a circle, the center of the cross section may be a circle center, that is, a point z. If the cross section is a graph having no symmetry or an irregular graph, the center of the cross section may be a center of gravity of the cross section.

In some embodiments, the optical fiber 100 may be a plastic optical fiber.

In some embodiments, the cross section may include at least five groups of points that meet the preset condition. Points included in each of the at least five groups of points may be different. Alternatively, any two of the at least five groups of points may include one same point.

For example, it is assumed that the cross section includes five groups of points, and the five groups of points are respectively (x₁, y₁), (x₂, y₂), (x₃, y₃), (x₄, y₄), and (x₅, y₅). (x₁, y₁) is a 1^{st} group of points. In other words, the 1^{st} group of points includes the point x₁ and the point y₁. By analogy, (x₅, y₅) is a 5^{th} group of points. In other words, the 5^{th} group of points includes the point x₅ and the point y₅. The point x₁, the point y₁, the point x₂, the point y₂, the point x₃, the point y₃, the point x₄, the point y₄, the point x₅, and the point y₅ may be 10 different points. Alternatively, for the 1^{st} group of points (x₁, y₁) and the 2^{nd} group of points (x₂, y₂), the point x₁ and the point x₂ may be a same point, and the point y₁ and the point y₂ are different points. Alternatively, the point x₁ and the point x₂ may be different points, and the point y₁ and the point y₂ are a same point.

In some embodiments, each point in the at least five groups of points in the cross section is located in one sector region of the cross section. An area of the sector region is not limited in this embodiment of this application. In particular, preferably, each point in the at least five groups of points in the cross section is located on a connection line from the center to an edge of the cross section.

Preferably, the cross section includes at least seven groups of points that meet the preset condition.

Preferably, a refractive index difference between at least two points in the cross section is greater than or equal to 0.013.

In some embodiments, a distance between every two points in the cross section is greater than or equal to 0.2 micrometers (micrometre, *µm*).

In some embodiments, a distance between two points included in each of the at least one group of points in the cross section is less than or equal to 50 micrometers, and a refractive index difference between the two points included in each group of points is greater than 0.002. Specifically, a distance between a point *xᵢ* and a point *yᵢ* in an i^{th} group of points in the at least one group of points in the cross section is less than or equal to 50 micrometers, a refractive index difference between the point *xᵢ* and the point *yᵢ* is greater than 0.002, and i is a positive integer greater than or equal to 1.

Preferably, a distance between two points included in each of the at least one group of points in the cross section is less than or equal to 50 micrometers, and a refractive index difference between the two points included in each group of points is greater than 0.004.

For example, when a point x is the center of the cross section, refractive index differences between some points y and the point x in the cross section are shown in Table 1.

**Table 1 Table of refractive index differences between some points y and a point x in a cross section**

| Distance between the point y and the point x | Refractive index difference between the point y and the point x | nx-ny | rx-ry |
|---|---|---|---|
| 0 | 0.0000 | 0.0000 | 0 |
| 80 | -0.0010 | 0.0010 | -80 |
| 100 | -0.0017 | 0.0017 | -100 |
| 120 | -0.0027 | 0.0027 | -120 |
| 140 | -0.0042 | 0.0042 | -140 |
| 160 | -0.0060 | 0.0060 | -160 |
| 180 | -0.0080 | 0.0080 | -180 |
| 200 | -0.0107 | 0.0107 | -200 |
| 220 | -0.0140 | 0.0140 | -220 |
| 240 | -0.0151 | 0.0151 | -240 |

In Table 1, a unit of the distance between the point y and the point x is micrometer, and a unit of rx-ry is micrometer.

As shown in Table 1, when the point x is the center of the cross section of the optical fiber 100, for a point y that is 80 micrometers away from the point x, a refractive index difference between the point x and the point y is 0.001.

In some embodiments, distribution of refractive indexes of some points in the connection line from the center to the edge in the cross section may be fitted as a curve. Alternatively, distribution of refractive index differences between the some points and the center point of the cross section may be fitted as a curve.

In some embodiments, the curve may be a downward convex curve or an upward convex curve. Preferably, the curve is an upward convex curve.

In some embodiments, the curve is a partial curve in a curve of a quadratic equation in one unknown or a partial curve in a curve of a cubic equation in one unknown.

In some embodiments, the curve may include two or three extreme values.

For example, when the x point is the center of the cross section, distribution of refractive index differences between some points y and the point x in the cross section is shown in FIG. 2.

FIG. 2 is a diagram of distribution curves of refractive index differences of some points in a cross section of an optical fiber according to an embodiment of this application. A horizontal coordinate in FIG. 2 is a distance between the point y and the point x in the cross section, and a unit is micrometer. A vertical coordinate in FIG. 2 is a refractive index difference between the point y and the point x in the cross section. FIG. 2 includes a curve 1 and a curve 2. The curve 1 represents the refractive index differences between some points y and the point x in the cross section of the optical fiber 100. The some points y are some points on a same connection line from the center to the edge of the cross section. The curve 2 is a curve obtained through fitting based on the curve 1.

It can be learned from FIG. 2 that the curve 2 is an upward convex curve. In other words, the curve 2 is a partial curve in a curve of a quadratic equation in one unknown. In other words, the curve 2 is a partial curve in a curve of a cubic equation in one unknown. In addition, the curve 1 and the curve 2 basically overlap. In other words, the refractive index differences between the some points y and the point x in the cross section of the optical fiber 100 are distributed in a smooth and gradient manner.

It can be further seen from FIG. 2 that, a difference between a refractive index of a point y close to the center of the cross section and a refractive index of the point x is small, and a difference between a refractive index of a point y away from the center of the cross section and the refractive index of the point x is large. In other words, the refractive index of the point y close to the center of the cross section is large, and the refractive index of the point y away from the center of the cross section is small.

In some embodiments, the optical fiber 100 is prepared by using M initial materials, and M is a positive integer greater than or equal to 2.

In some embodiments, the M initial materials include a first initial material. A transmittance of the first initial material is greater than 80%, or preferably greater than 85%, or more preferably greater than 90%.

In some embodiments, the M initial materials include a second initial material. A transmittance of the second initial material is greater than 80%, or preferably greater than 85%, or more preferably greater than 90%. The second initial material is an initial material that is in the M initial materials and that is different from the first initial material.

In some embodiments, each of the M initial materials may be a fluorine-containing material, or may be a fluorine-free material.

When any one of the M initial materials is a fluorine-containing material, a fluorine content of the initial material is not limited. Generally, a fluorine-containing material, especially a non-crystalline fluorine-containing material, has a low refractive index and a good transmittance. A high-performance plastic optical fiber can be prepared by appropriate selection.

In some embodiments, a refractive index of a material may be obtained based on an Abbe refractometer test. A test wavelength of a refractive index is not limited in this embodiment of this application, for example, may be 656 nanometers (nanometer, nm).

In some embodiments, the initial material may be a single material, or may be a mixed material including materials with different refractive indexes.

In some embodiments, the first initial material may be polymer with a high refractive index. For example, the first initial material may be a material including a small molecule with a high refractive index and a polymethyl methacrylate (polymethyl methacrylate, PMMA).

In some embodiments, the second initial material may be polymer with a low refractive index. For example, the second initial material may be a PMMA material.

A specific value or a value range of the refractive index of the first initial material or the second initial material is not limited in this embodiment of this application.

In some embodiments, a refractive index difference between the first initial material and the second initial material is greater than or equal to 0.01. Preferably, the refractive index difference between the first initial material and the second initial material is greater than or equal to 0.013. For example, as shown in the following Table 2 and Table 3, it is assumed that refractive indexes of the first initial material and the second initial material under a test condition of a 656 nm wavelength are respectively 1.507 and 1.488. The refractive index difference between the first initial material and the second initial material may be 0.019.

In some embodiments, the optical fiber 100 may include N materials, the N materials are prepared by using the M initial materials, and N is a positive integer greater than or equal to 2. At least two of the N materials have different refractive indexes.

A value relationship between N and M is not limited in this embodiment of this application. For example, N may be less than M, or N may be greater than or equal to M. Preferably, N is greater than M.

In some embodiments, the optical fiber 100 may include a first material, and the first material is the first initial material.

In some embodiments, the optical fiber 100 may include a second material, and the second material is prepared by using at least two initial materials. A transmittance of the second material is greater than 80%, or preferably greater than 85%, or more preferably greater than 90%.

In some embodiments, the optical fiber 100 may include a third material, and the third material is prepared by using at least two initial materials. A transmittance of the third material is greater than 80%, or preferably greater than 85%, or more preferably greater than 90%.

In some embodiments, the optical fiber 100 may include a fourth material, and the fourth material is prepared by using at least two initial materials. A transmittance of the fourth material is greater than 80%, or preferably greater than 85%, or more preferably greater than 90%.

In some embodiments, the optical fiber 100 may include a fifth material, and the fifth material is prepared by using at least two initial materials. A transmittance of the fifth material is greater than 80%, or preferably greater than 85%, or more preferably greater than 90%.

In some embodiments, the optical fiber 100 may include a sixth material, and the sixth material is prepared by using at least two initial materials. A transmittance of the sixth material is greater than 80%, or preferably greater than 85%, or more preferably greater than 90%.

In some embodiments, the optical fiber 100 may include a seventh material, and the seventh material is the second initial material.

It should be understood that the first material, the second material, the third material, the fourth material, the fifth material, the sixth material, and the seventh material are different materials in the N materials, and proportions of initial materials included in at least two of the N materials are different. The N materials may include any one or more of the first material, the second material, the third material, the fourth material, the fifth material, the sixth material, and the seventh material. For example, the first material, the second material, the third material, the fourth material, the fifth material, the sixth material, and the seventh material may be respectively one material in seven first outlets in Table 2 and Table 3.

In some embodiments, a transmittance of a material of the optical fiber is greater than 80%. Preferably, a transmittance of a material of the optical fiber is greater than 85%. More preferably, a transmittance of a material of the optical fiber is greater than 90%.

In some embodiments, the transmittance of the material of the optical fiber is determined by using a finished optical fiber or a part of a finished optical fiber to make a film and then performing a test. Similarly, a transmittance of any one of the M initial materials or any one of the N materials may be determined by using a finished material to make a film and then performing a test. A specific test wavelength of the transmittance is not limited in this embodiment of this application. A wavelength near a light source is preferably used. For example, the test wavelength may be 650 nm.

In some embodiments, each of the N materials may be a fluorine-containing material, or may be a fluorine-free material.

When any one of the N materials is a fluorine-containing material, a fluorine content of the material is not limited. Generally, a fluorine-containing material, especially a non-crystalline fluorine-containing material, has a low refractive index and a good transmittance. A high-performance plastic optical fiber can be prepared by appropriate selection.

FIG. 3 is a schematic flowchart of a method for preparing an optical fiber according to an embodiment of this application. FIG. 3 includes the following step S310.

S310: Input M initial materials into an optical fiber preparer, and obtain an optical fiber from an outlet of the optical fiber preparer.

At least two of the M initial materials have different refractive indexes, and M is a positive integer greater than or equal to 2. Preferably, M=2 or 3.

In some embodiments, the M initial materials include the first initial material and/or the second initial material.

In some embodiments, the optical fiber obtained from the outlet of the optical fiber preparer is similar to the optical fiber 100 in FIG. 1.

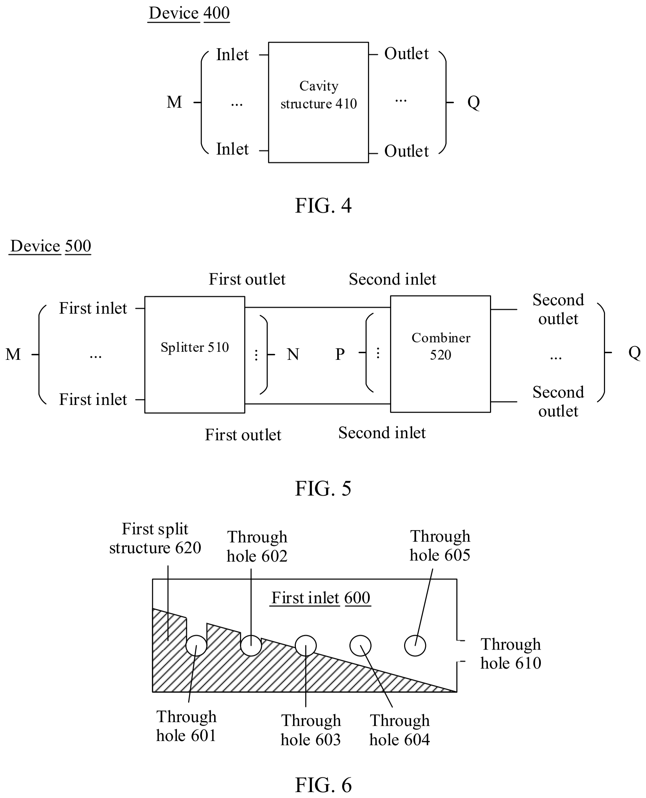

Optionally, the optical fiber preparer may be a device 400 shown in FIG. 4.

FIG. 4 is a diagram of a structure of a device for preparing an optical fiber according to an embodiment of this application. The device 400 in FIG. 4 includes a cavity structure 410. The cavity structure 410 is provided with M inlets and Q outlets, where Q is a positive integer greater than or equal to 1. At least two of the M inlets communicate with the Q outlets. The M inlets are used to input the M initial materials, and the Q outlets are used to obtain optical fibers.

Preferably, Q=1.

A specific shape or material of the cavity structure 410 is not specifically limited in this embodiment of this application. For example, the cavity structure 410 may be a regular cuboid, a cylinder, a prism, or the like, or the cavity structure 410 may have an irregular shape, or the cavity structure 410 may be formed by splicing substructures with regular shapes and/or substructures with irregular shapes.

In some embodiments, the optical fiber may be directly obtained from the outlet of the optical fiber preparer. Alternatively, an optical fiber preform, for example, an optical fiber preform rod, may be obtained from the outlet of the optical fiber preparer. The optical fiber preform may be stretched, coiled, or the like to form an optical fiber.

Optionally, the optical fiber preparer may be a device 500 shown in FIG. 5. It should be understood that the device 500 is one design in this embodiment of this application. Various functional parts may be added to the device based on a requirement. A position of an added part is not limited, and may be before a splitter 510, between the splitter 510 and a combiner 520, or after the combiner 520. Alternatively, a plurality of functional parts may be added.

FIG. 5 is a diagram of a structure of a device 500 for preparing an optical fiber according to an embodiment of this application. The device 500 in FIG. 5 includes the splitter 510 and the combiner 520. The splitter 510 includes M first inlets and N first outlets, at least two of the M first inlets communicate with at least one of the N first outlets. The combiner 520 includes P second inlets and Q second outlets, and the P second inlets communicate with the Q second outlets. The N first outlets of the splitter 510 communicate with the P second inlets of the combiner 520. N and P are positive integers greater than or equal to 2, and P is greater than or equal to Q.

Optionally, the M first inlets of the splitter 510 may be the M inlets of the optical fiber preparer 500, or each first inlet of the splitter 510 may communicate with one inlet of the optical fiber preparer 500. The Q second outlets of the combiner 520 may be the Q outlets of the optical fiber preparer 500, or each second outlet of the combiner 520 may communicate with one outlet of the optical fiber preparer 500. The N first outlets of the splitter 510 communicate with the P second inlets of the combiner 520.

Preferably, N is a positive integer greater than or equal to 5.

A value relationship between P and N is not limited in this embodiment of this application. For example, P may be less than N, or P may be greater than or equal to N. Preferably, P is equal to N.

In some embodiments, after the M initial materials are respectively input into the M first inlets of the splitter 510, N materials may be obtained from the N first outlets of the splitter 510. Proportions of initial materials included in at least two of the N materials are different.

A value relationship between N and M is not limited in this embodiment of this application. For example, N may be less than M, or N may be greater than or equal to M. Preferably, N is greater than M.

In some embodiments, after the N materials are obtained from the N first outlets of the splitter 510, the N materials may be respectively input into the P second inlets of the combiner 520, and optical fibers are obtained from the Q second outlets of the combiner 520.

In some embodiments, the optical fiber may be directly obtained from the second outlet of the combiner 520. Alternatively, an optical fiber preform, for example, an optical fiber preform rod, may be obtained from the second outlet of the combiner 520. The optical fiber preform may be stretched, coiled, or the like to form an optical fiber.

Optionally, the splitter 510 may include a porous plate structure. At least two of the M initial materials are sequentially input to at least one first outlet of the splitter 510 through at least two first inlets of the splitter 510 and the porous plate structure. Quantities of the at least two of the M initial materials that are input to the first outlet through the porous plate structure are different.

In some embodiments, the porous plate structure includes a substrate, and the substrate is provided with at least one through hole. When the porous plate structure includes a plurality of through holes, the plurality of through holes may be completely the same, or at least two of the plurality of through holes may be different. That the at least two through holes are different means that shapes and/or sizes of the at least two through holes may be different.

For example, it is assumed that the porous plate structure includes two through holes: a first through hole and a second through hole. The first through hole is different from the second through hole. The first initial material may be input to the first outlet through the first through hole in the porous plate structure, and the second initial material may be input to the first outlet through the second through hole in the porous plate structure. Because the first through hole is different from the second through hole, quantities of the first initial material and the second initial material that are input to the first outlet are different. In other words, by enabling different initial materials to pass through different through holes of the porous plate structure, a quantity of initial materials passing through each through hole may be adjusted, to control a quantity of initial materials passing through the porous plate structure, so as to control a proportion of the initial material included in the material output from the first outlet. For example, as shown in the following Table 2 and Table 3, after two initial materials are input into the splitter and are split by using the porous plate structure, seven materials may be obtained from the seven first outlets of the splitter. Proportions of initial materials included in at least two of the seven materials are different. As a result, at least two of the seven materials have different refractive indexes.

It should be understood that a quantity of porous plate structures included in the splitter 510 is not limited in this embodiment of this application. In other words, the splitter 510 may include one or more porous plate structures.

In some embodiments, the porous plate structure may be disposed in a communication cavity. In other words, the splitter 510 may include the communication cavity. The communication cavity may communicate with at least two of the M first inlets, and the communication cavity may further communicate with at least one of the N first outlets. An initial material input to the communication cavity is output to the first outlet in communication with the communication cavity after passing through the porous plate structure.

In some embodiments, a non-planar structure may be further disposed in the communication cavity. The non-planar structure is disposed between the porous plate structure and one inlet of the communication cavity, and each inlet of the communication cavity communicates with at least one first inlet. In other words, the non-planar structure is disposed at an inlet close to the communication cavity. Flow rates of an initial material before and after the initial material passes through the non-planar structure are different.

Optionally, a first split structure is disposed in at least one of the M first inlets. Quantities of the initial materials split through the first split structure are different. In other words, the initial material is input into the first outlet after passing through the first split structure, so that a quantity of the initial material input into the first outlet can be adjusted, to control a proportion of the initial material included in the material output from the first outlet. For example, as shown in the following Table 2 and Table 3, after two initial materials are input into the splitter and are split by using the first split structure, seven materials may be obtained from the seven first outlets of the splitter. Proportions of initial materials included in at least two of the seven materials are different. As a result, at least two of the seven materials have different refractive indexes.

In some embodiments, the first split structure may include at least two different through holes, and the first inlet provided with the first split structure communicates with at least one first outlet through the at least two different through holes. That the through holes are different may mean that sizes of cross sections of the through holes are different. A size of a cross section of a through hole includes information like a length, a width, a radius, a diameter, and an area of the cross section of the through hole. Alternatively, the first split structure may include at least two different runners, and the first inlet provided with the first split structure communicates with at least one first outlet through the at least two different runners. That the runners are different may mean that lengths and/or cross-sectional sizes of the runners are different. That the runners are the same may mean that both lengths and cross-sectional sizes of the runners are the same.

In some embodiments, the first inlet may communicate with at least one first outlet through at least one through hole, and an inner surface of the first inlet in which the at least one through hole is located is a first inner surface. The first split structure may be attached to the first inner surface.

For example, when the first inlet is a runner structure or a cavity structure, a distance between a first surface of the first split structure and the first through hole is different from a distance between the first through hole and a bottom surface of the first inlet. The first surface of the first split structure is a surface that is of the first split structure and that is close to the first through hole, and the first through hole is any one of the at least one through hole of the first inlet. The first split structure is configured to control a quantity of initial materials passing through each through hole of the first inlet.

A specific form of the first split structure is not limited in this embodiment of this application. For example, the first split structure may have a regular shape, or may have an irregular shape. For example, the first split structure may be a first split structure 620 shown in FIG. 6. It should be understood that FIG. 6 is a possible form of the first split structure. Based on an actual requirement, the first split structure may alternatively be represented in a plurality of other forms such as a staircase structure and a curved surface structure.

FIG. 6 is a diagram of a cross section of a first inlet according to an embodiment of this application. A first inlet 600 in FIG. 6 includes a through hole 610, a first split structure 620, a through hole 601, a through hole 602, a through hole 603, a through hole 604, and a through hole 605. The through hole 610 is used to input an initial material. The through hole 601 to the through hole 605 each may communicate with at least one first outlet. The initial material input through the through hole 610 is input to the through hole 601 to the through hole 605 by different quantities after passing through the first split structure 620. Sizes of cross sections of the through hole 601 to the through hole 605 are not limited in this embodiment of this application. For example, the through hole 601 to the through hole 605 may be a same through hole, or at least two of the through hole 601 to the through hole 605 may be different through holes.

Optionally, apertures at two ends of each of the N first outlets may be the same, and an aperture that is of the first outlet with the same aperture at two ends and that is close to the first inlet is the same as an aperture that is of the first outlet with the same aperture at two ends and that is away from the first inlet. Alternatively, the N first outlets include at least one first outlet with different apertures at two ends, and an aperture that is of the first outlet with different apertures at two ends and that is close to the first inlet is different from an aperture that is of the first outlet with different apertures at two ends and that is away from the first inlet. Flow rates of a material before and after the material passes through the first outlets with different apertures at two ends are different.

Optionally, the combiner 520 may include a first runner. The first runner communicates the P second inlets with the Q second outlets. The N materials input from the P second inlets may be composited in the first runner, and Q optical fibers or Q optical fiber preforms are obtained from the Q second outlets.

Optionally, the combiner 520 may include a central spindle. The central spindle is disposed between the P second inlets and the Q second outlets. The N materials input from the P second inlets may be composited on a surface of the central spindle, and Q optical fibers or Q optical fiber preforms are obtained from the Q second outlets.

In some embodiments, the central spindle may be disposed in the first runner, or a part of the central spindle may be located in the first runner.

Optionally, at least one of the P second inlets of the combiner 520 may include a first opening, a second runner, and a second opening that sequentially communicate with each other. After being input from the first opening, a material is input to the second outlet through the second runner and the second opening. A specific form of the second runner is not limited in this embodiment of this application. For example, the second runner is a runner of a linear structure, a runner of a non-linear structure, a groove of a linear structure, or a groove of a non-linear structure. When the second runner is a runner or a groove of a non-linear structure, the material input from the first opening does not directly flow into the first runner, or does not directly cover the central spindle. In addition, a flow distance of the material in the second inlet can be better controlled, and a fuse-element flow rate can be controlled, so that structural distribution of layers of materials in the prepared optical fiber is more even. In some embodiments, the second runner may be of a closed structure or a non-closed structure.

Optionally, the M initial materials may be obtained by using M extruders. Each of the M extruders may communicate with one inlet of the optical fiber preparer.

Optionally, a floating rate of a refractive index of each of the N materials in the first outlet of the splitter or the second inlet of the combiner is less than 0.5%.

For example, it is assumed that refractive indexes of two initial materials input to the splitter are respectively 1.507 and 1.488 under a test condition of a 656 nm wavelength. When N=7, floating rate data of a refractive index of a material at a same location in the splitter at different time points within 50 minutes under a test condition of a 656 nm wavelength is shown in Table 2 and Table 3. Floating rate = (sampling refractive index - average refractive index) * 100/average refractive index. The average refractive index is an average value of refractive indexes of 10 batches of sampling materials.

**Table 2 Floating rate data table of a refractive index of a material**

| Location | 1 | | 2 | | 3 | | 4 | |
|---|---|---|---|---|---|---|---|---|
| Time | Refractive index | Floating rate | Refractive index | Floating rate | Refractive index | Floating rate | Refractive index | Floating rate |
| 5 | 1.507 | 0.0 | 1.504 | 0.0 | 1.501 | 0.0 | 1.498 | 0.0 |
| 10 | 1.506 | 0.0 | 1.504 | 0.0 | 1.502 | 0.0 | 1.498 | 0.1 |
| 15 | 1.505 | -0.1 | 1.505 | 0.0 | 1.502 | 0.0 | 1.498 | 0.0 |
| 20 | 1.506 | 0.0 | 1.504 | 0.0 | 1.502 | 0.0 | 1.498 | 0.0 |
| 25 | 1.507 | 0.0 | 1.504 | 0.0 | 1.502 | 0.0 | 1.498 | 0.0 |
| 30 | 1.507 | 0.0 | 1.504 | 0.0 | 1.502 | 0.0 | 1.497 | -0.1 |
| 35 | 1.506 | 0.0 | 1.504 | 0.0 | 1.502 | 0.0 | 1.497 | -0.1 |
| 40 | 1.507 | 0.0 | 1.504 | 0.0 | 1.502 | 0.0 | 1.497 | -0.1 |
| 45 | 1.507 | 0.0 | 1.504 | 0.0 | 1.502 | 0.0 | 1.498 | 0.0 |
| 50 | 1.507 | 0.0 | 1.503 | -0.1 | 1.502 | 0.0 | 1.498 | 0.0 |
| Average value | 1.507 | - | 1.504 | - | 1.502 | - | 1.497 | - |

**Table 3 Floating data table of a refractive index of a material**

| Location | 5 | | 6 | | 7 | |
|---|---|---|---|---|---|---|
| Time | Refractive index | Floating rate | Refractive index | Floating rate | Refractive index | Floating rate |
| 5 | 1.494 | 0.0 | 1.492 | 0.0 | 1.488 | 0.0 |
| 10 | 1.495 | 0.0 | 1.492 | 0.0 | 1.488 | 0.0 |
| 15 | 1.494 | 0.0 | 1.491 | 0.0 | 1.488 | -0.1 |
| 20 | 1.495 | 0.0 | 1.491 | 0.0 | 1.488 | 0.0 |
| 25 | 1.495 | 0.0 | 1.491 | 0.0 | 1.488 | 0.0 |
| 30 | 1.494 | 0.0 | 1.491 | 0.0 | 1.488 | 0.0 |
| 35 | 1.494 | 0.0 | 1.491 | 0.0 | 1.489 | 0.0 |
| 40 | 1.494 | -0.1 | 1.491 | 0.0 | 1.489 | 0.0 |
| 45 | 1.495 | 0.0 | 1.491 | 0.0 | 1.488 | 0.0 |
| 50 | 1.494 | 0.0 | 1.491 | 0.0 | 1.488 | 0.0 |
| Average value | 1.494 | - | 1.491 | - | 1.488 | - |

As shown in Table 2 and Table 3, an average refractive index of the material at a first location within 50 minutes is about 1.507, and a floating index of the refractive index of the material at the first location at a 15^{th} minute is (1.505-1.507) *100/1.507≈-0.1. The first location, a second location, a third location, a fourth location, a fifth location, a sixth location, and a seventh location are respectively located at different first outlets of the splitter. It can be learned from Table 2 and Table 3 that floating rates of refractive indexes of materials in different first outlets within 50 minutes are less than or equal to 0.1%.

When each first outlet communicates with one second inlet, floating rates of refractive indexes of materials in the first outlet and the second inlet that communicate with each other are basically the same. In other words, it can be learned from Table 2 and Table 3 that floating rates of refractive indexes of materials in different second inlets within 50 minutes may be less than or equal to 0.1%.

It can be learned from Table 2 and Table 3 that, according to the method in this embodiment of this application, the floating rate of the refractive index of the material at each first outlet of the splitter or each second inlet of the combiner is small within specific duration. In other words, according to the method in this embodiment of this application, the refractive index of the material at each first outlet of the splitter or each second inlet of the combiner can be stable, so that an optical fiber with a stable structure is prepared. In addition, according to the method in this embodiment of this application, the plastic optical fiber with a graded refractive index can be prepared by using only two materials with different refractive indexes, so that difficulty in preparing the plastic optical fiber is reduced.

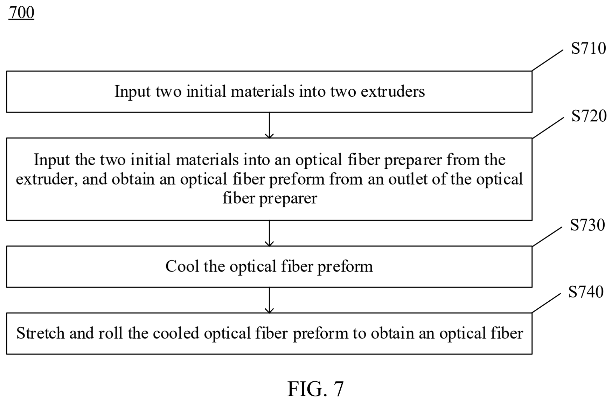

FIG. 7 is a schematic flowchart of a method for preparing an optical fiber according to an embodiment of this application. The method in FIG. 7 includes the following steps.

S710: Input two initial materials into two extruders.

The two initial materials with different refractive indexes are dried and then respectively put into two extruders. A specific extrusion temperature of the extruder is not limited in this embodiment of this application, and may be determined based on thermal performance of different initial materials. Preferably, a highest extrusion temperature corresponding to each initial material may be within a range of Tg+50 degrees Celsius (°C) to Tg+150°C. Tg is a glass transition temperature of the initial material.

Optionally, the two initial materials may include the first initial material and/or the second initial material.

In some embodiments, a highest extrusion temperature corresponding to the first initial material may be 210°C. A highest extrusion temperature corresponding to the second initial material may be 220°C.

Optionally, the two initial materials may be put into the extruder after being dried at 80°C for more than 4 hours.

S720: Input the two initial materials into an optical fiber preparer from the extruder, and obtain an optical fiber preform from an outlet of the optical fiber preparer.

The optical fiber preparer may be similar to the optical fiber preparer 400 in FIG. 4 and the optical fiber preparer 500 in FIG. 5, and details are not described herein again.

In some embodiments, the optical fiber preparer includes two inlets. The two extruders respectively communicate with the two inlets of the optical fiber preparer, to input the two initial materials into the optical fiber preparer.

When the optical fiber preparer is similar to the device 500 in FIG. 5, a split quantity of each initial material in a splitter is not limited in this embodiment of this application. For example, each initial material may be split into five or more parts after entering the splitter.

In this embodiment of this application, a composite temperature at which a plurality of materials in a combiner are composited into the optical fiber preform is not limited. The composite temperature may be determined based on thermal performance of each initial material. For example, when the two initial materials are the first initial material and the second initial material, the composite temperature may be between 215°C and 220°C.

In some embodiments, the optical fiber may be directly obtained from the outlet of the optical fiber preparer. When the optical fiber can be directly obtained from the outlet of the optical fiber preparer, the method 700 ends, that is, steps S730 and S740 may not be performed.

In some embodiments, the optical fiber preform may be obtained from the outlet of the optical fiber preparer. When the optical fiber preform is obtained at the outlet of the optical fiber preparer, the method 700 may further include steps S730 and S740.

S730: Cool the optical fiber preform.

Optionally, the optical fiber preform may be cooled in a manner like natural cooling or air cooling. The natural cooling manner is cooling at a room temperature.

S740: Stretch and roll the cooled optical fiber preform to obtain an optical fiber.

After the optical fiber preform is fully cooled, stretching and rolling operations may be performed to obtain the optical fiber.

Optionally, the optical fiber may have different core diameters based on different rolling speeds. A rolling speed is not limited in this embodiment of this application, and may be determined based on a core diameter that is of the optical fiber and that needs to be obtained. A core diameter of the prepared optical fiber is not limited in this embodiment of this application, and may be determined based on an actual use requirement. For example, a core diameter of the optical fiber may be 0.5 millimeters. In other words, a radius may be 0.25 millimeters.

An embodiment of this application may provide a communication medium. The communication medium may include an external sleeve and the optical fiber described in the foregoing embodiments of this application. Alternatively, the optical fiber in the communication medium is prepared by using the method shown in FIG. 3 or FIG. 7.

Optionally, the communication medium may be, for example, a plastic optical fiber, an optical cable, or a jumper.

An embodiment of this application may provide an optical module. The optical module may include an optical-to-electrical converter and the optical fiber described in the foregoing embodiments of this application. Alternatively, the optical fiber in the optical module is prepared by using the method shown in FIG. 3 or FIG. 7.

An embodiment of this application may provide an optical transmission system. The optical transmission system may include an optical transmitter, an optical receiver, and the optical fiber described in the foregoing embodiments of this application. Alternatively, the optical fiber in the optical transmission system is prepared by using the method shown in FIG. 3 or FIG. 7.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical fiber, wherein a refractive index difference between at least two points in a cross section of the optical fiber is greater than or equal to 0.01, at least five groups of points in the cross section meet a preset condition, a k^{th} group of points in the at least five groups of points comprise a point *xₖ* and a point *yₖ*, the point *xₖ* and the point *yₖ* are any point in the cross section, the preset condition comprises *nxₖ - nyₖ* ≥ 0.001 and *rxₖ - ryₖ <* 0 *, nxₖ* is a refractive index of the point *xₖ, nyₖ* is a refractive index of the point *yₖ, rxₖ* is a distance from the point *xₖ* to a center of the cross section, *ryₖ* is a distance from the point *yₖ* to the center of the cross section, and k is a positive integer greater than or equal to 1.

2. The optical fiber according to claim 1, wherein at least seven groups of points in the cross section meet the preset condition.

3. The optical fiber according to claim 1 or 2, wherein a refractive index difference between at least two points in the cross section is greater than or equal to 0.013.

4. The optical fiber according to any one of claims 1 to 3, wherein a distance between the point *xᵢ* and the point *yᵢ* in an i^{th} group of points in at least one group of points in the cross section is less than or equal to 50 micrometers, a refractive index difference between the point *xᵢ* and the point *yᵢ* is greater than 0.002, and i is a positive integer greater than or equal to 1.

5. The optical fiber according to any one of claims 1 to 4, wherein a transmittance of a material of the optical fiber is greater than 80%.

6. The optical fiber according to any one of claims 1 to 5, wherein a transmittance of a material of the optical fiber is greater than 90%.

7. The optical fiber according to claim 5 or 6, wherein a test wavelength of the transmittance is 650 nanometers.

8. The optical fiber according to any one of claims 1 to 7, wherein a distance between every two points in the cross section is greater than or equal to 0.2 micrometers.

9. The optical fiber according to any one of claims 1 to 8, wherein distribution of refractive indexes of some points in a connection line from the center to an edge in the cross section is fitted as a curve, or distribution of refractive index differences between the some points and the center point in the cross section is fitted as a curve.

10. The optical fiber according to claim 9, wherein the curve is an upward convex curve.

11. The optical fiber according to claim 9 or 10, wherein the curve is a partial curve in a curve of a quadratic equation in one unknown or a partial curve in a curve of a cubic equation in one unknown.

12. The optical fiber according to any one of claims 1 to 11, wherein the optical fiber is a plastic optical fiber.

13. A method for preparing an optical fiber, comprising:
inputting M initial materials into an optical fiber preparer, and obtaining the optical fiber from an outlet of the optical fiber preparer, wherein refractive indexes of at least two of the M initial materials are different.

14. The method according to claim 13, wherein the optical fiber preparer comprises a splitter and a combiner, the splitter comprises M first inlets and N first outlets, at least two of the M first inlets communicate with at least one of the N first outlets, the combiner comprises P second inlets and Q second outlets, the P second inlets communicate with the Q second outlets, the N first outlets communicate with the P second inlets, M, N, and P are positive integers greater than or equal to 2, Q is a positive integer greater than or equal to 1, and P is greater than or equal to Q.

15. The method according to claim 14, wherein inputting the M initial materials into the optical fiber preparer, and obtaining the optical fiber from the outlet of the optical fiber preparer comprises:
separately inputting the M initial materials into the M first inlets of the splitter, and obtaining N materials from the N first outlets of the splitter, wherein proportions of initial materials comprised in at least two of the N materials are different.

16. The method according to claim 15, wherein the method further comprises:
separately inputting the N materials into the P second inlets of the combiner, and obtaining the optical fiber from the Q second outlets of the combiner, wherein P is equal to N.

17. The method according to claim 15 or 16, wherein a floating rate of a refractive index of each of the N materials in the first outlet of the splitter or the second inlet of the combiner is less than 0.5%.

18. The method according to any one of claims 14 to 17, wherein the splitter further comprises a porous plate structure, at least two of the M initial materials are sequentially input to the at least one first outlet through the at least two first inlets and the porous plate structure, and quantities of the at least two of the M initial materials that are input to the first outlet through the porous plate structure are different.

19. The method according to any one of claims 14 to 18, wherein a first split structure is disposed in at least one of the M first inlets, and quantities of the initial materials split through the first split structure are different.

20. The method according to any one of claims 13 to 19, wherein the method further comprises:
obtaining the M initial materials through M extruders.

21. The method according to any one of claims 13 to 20, wherein the optical fiber is the optical fiber according to any one of claims 1 to 12.

22. A communication medium, comprising an external sleeve and the optical fiber according to any one of claims 1 to 12, or the optical fiber in the communication medium is prepared by using the method according to any one of claims 13 to 21.

23. An optical module, comprising an optical-to-electrical converter and the optical fiber according to any one of claims 1 to 12, or the optical fiber in the optical module is prepared by using the method according to any one of claims 13 to 21.

24. An optical transmission system, comprising an optical transmitter, an optical receiver, and the optical fiber according to any one of claims 1 to 12, or the optical fiber in the optical transmission system is prepared by using the method according to any one of claims 13 to 21.
